# EUROPEAN PATENT SPECIFICATION

(11) **EP 2 620 231 B1**
(45) Date of publication and mention of the grant of the patent: **18.03.2015**
(21) Application number: 12832701.2
(22) Date of filing: 17.12.2012
(51) Int. Cl.: B09B 1/00, B09B 5/00, G21F 9/24, B09B 3/00

(54) **INORGANIC WASTE SOLID SHIELD STRUCTURE AND METHOD FOR MANUFACTURING INORGANIC WASTE SOLID SHIELD STRUCTURE**
FESTE STRUKTUR ZUR ABSCHIRMUNG GEGEN ANORGANISCHE ABFÄLLE UND VERFAHREN ZUR HERSTELLUNG DER FESTEN STRUKTUR ZUR ABSCHIRMUNG GEGEN ANORGANISCHE ABFÄLLE
STRUCTURE DE BLINDAGE POUR DECHETS INORGANIQUES SOLIDES AINSI QUE PROCEDE DE FABRICATION ASSOCIE

(30) Priority: 20.09.2012 JP 2012207637
(43) Date of publication of application: 31.07.2013
(73) Proprietor: Fuji Corporation Co., Ltd., Saku-shi, Nagano 385-0009 (JP)
(72) Inventor: YAMAGUCHI, Tokichiro, Saku-shi Nagano 3850009 (JP)
(74) Representative: Hofmann, Ralf U.
(86) International application number: PCT/JP2012/082689
(87) International publication number: WO 2013/077475

(56) References cited:
- GB-A- 2 454 485
- JP-A- 2002 370 074
- JP-A- 2008 173 570
- JP-A- 2010 207 669
- JP-A- 2010 207 669
- JP-A- 2010 240 501
- JP-A- 2010 240 501

## Description

### Technical Field

The present invention relates to an inorganic waste solidification shield structure that shields a compacted formation obtained by filling in banking material containing inorganic waste at a final disposal site, and a manufacturing method thereof.

### Background Art

In the related art, as a compacted formation of this type, there exists the below Patent Literature 1, by the present applicant. Such a compacted formation is made to be a cement solidification by repeatedly pouring and compressing banking material, being a mixture of cement and inorganic waste, into unit divisions enclosed by walls, and finally solidifying the result. Then, by expanding the unit divisions horizontally and also vertically, it is possible to completely prevent hazardous substances in the inorganic waste from eluting in rainwater, with the entire disposal site as cement solidifications.

### Prior Art Literature

### Patent Literature

Patent Literature 1: Japanese Patent No. 4317260

### Disclosure of the Invention

### Problem to be Solved by the Invention

Herein, the present applicant ascertained by diligent experiment and research that it is desirable to prevent the inorganic waste in each of the compacted formations from coming into contact with rainwater, even during the process of successively producing compacted formations at a final disposal site.

Obviously it is also conceivable to cover the already-produced compacted formations overall with a vinyl sheet or the like, but there has been a desire for research and development into methods such as methods of more effectively avoiding contact between inorganic waste and rainwater.

Thus, the present invention takes as an objective to provide a method of manufacturing an inorganic waste solidification shield structureable to avoid contact between inorganic waste and rainwater by shielding compacted formations obtained by filling in banking material containing waste at a final disposal site.

### Means for Solving the Problem

A method of manufacturing an inorganic waste solidification shield structure in accordance with claim 1.

According to such a method of manufacturing the inorganic waste solidification shield structure in accordance with the present invention, shields are formed on the top and lateral faces of compacted formations formed as compacted formations in the first to third steps according to the inorganic waste disposal method in the Patent Literature 1 by the present applicant.

In other words, in the fourth step, there is formed on the top face of the compacted formation an upper primary shield layer obtained by evenly spreading and compacting gravel on top of the second compacted formation and the third compacted formation. Additionally, the upper capping layer is formed by evenly spreading the covering material consisting of the cement mixture on top, and evenly spreading and compacting gravel onto the evenly spread covering material. Additionally, the upper secondary shield layer is formed by evenly spreading gravel on top. Furthermore, the upper primary shield layer, the upper capping layer, and the upper secondary shield layer are integrated by placing the weight on top of the upper secondary shield layer and allowing the curing period to elapse, thereby making it possible to form a strong upper shield structure.

Thus, contact between inorganic waste and rainwater is completely avoided at the top face of the compacted formation due to the upper shield structure integrating these three layers of shields.

Additionally, in the fifth step, first there is formed on the lateral face of the compacted formation the lateral primary shield layer in which the coating is applied. Additionally, there is formed the lateral capping layer by applying the thick coating thereover. Additionally, there is formed the lateral secondary shield layer by applying the coating thereover.

Thus, contact between inorganic waste and rainwater is completely avoided by these three layers of shields at a lateral face of the compacted formation.

In this way, according to the method of manufacturing the inorganic waste solidification shield structure in accordance with the third aspect of the invention, it is possible to shield the top and lateral faces of the compacted formation obtained by filling in banking material containing inorganic waste at the final disposal site, and avoid contact between inorganic waste and rainwater.

### Brief Description of Drawings

FIG. 1 is an explanatory diagram illustrating fill divisions at a final disposal site;
FIG. 2 is a flowchart illustrating steps in a method for manufacturing an inorganic waste solidification shield structure of the present embodiment;
FIG. 3 is an explanatory diagram illustrating the method for manufacturing an inorganic waste solidification shield structure in FIG. 2;
FIG. 4 is an explanatory diagram for respective steps in the flowchart in FIG 2; and
FIG 5 is an explanatory diagram for respective steps in the flowchart in FIG 2, continuing from FIG. 4.

### Mode for Carrying Out the Invention

A method of manufacturing an inorganic waste solidification shield structure will now be described as an exemplary embodiment of the present invention.

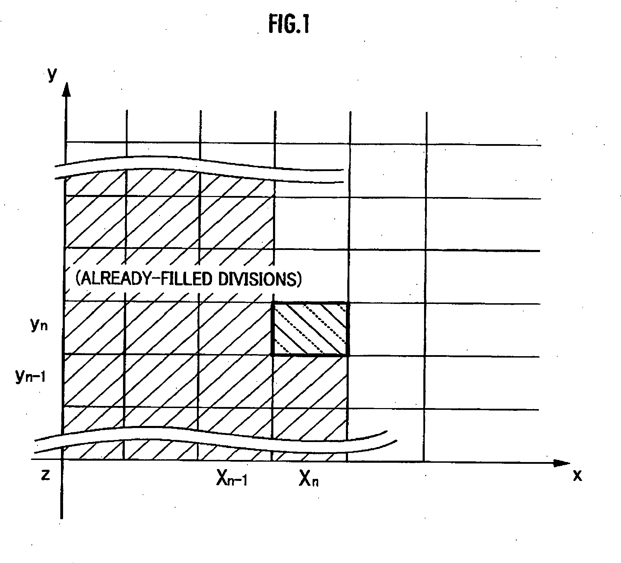

As illustrated in FIG. 1, the divisions to be filled with banking material containing inorganic waste can be defined as a fill direction X and a fill direction Y orthogonal to the fill direction X in the same plane, and once filling in the same plane is finished, can be expanded by defining a next plane in the height direction Z.

In the present embodiment, the case of shielding compacted formations obtained by filling in banking material containing inorganic waste in divisions (Xn, Yn) on a level Zn will be described hereinafter.

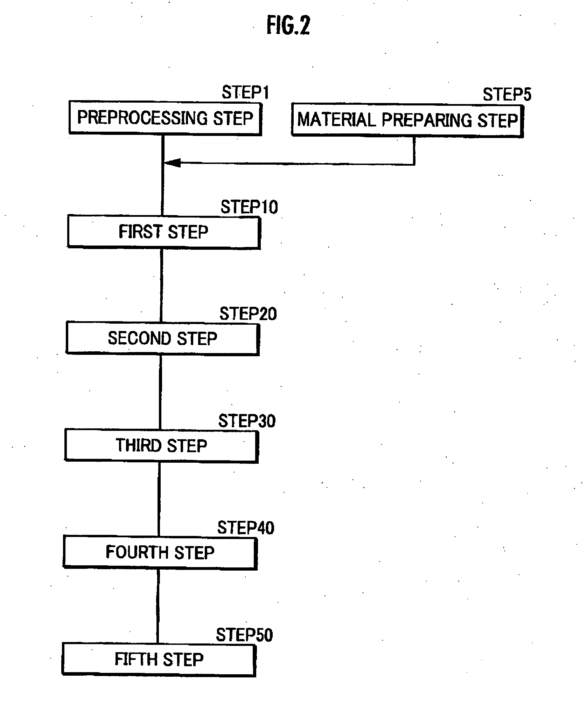

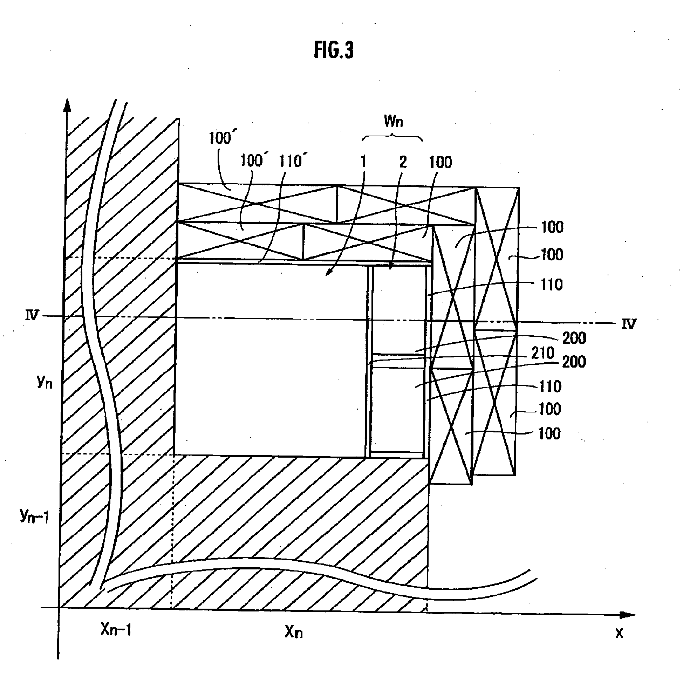

As illustrated in FIG. 3, for the inorganic waste solidification shield structure, first, the divisions (Xn, Yn) on a level Zn are divided by walls to form a fill space Wn, and the fill space Wn is partitioned in the horizontal direction to form a first space 1 and a second space 2 (FIG. 2, step 1: preprocessing step).

Specifically, in such a preprocessing step, the fill space Wn is first formed by the walls of already-filled adjacent divisions (Xn, Yn-1) and (Xn-1, Yn), and walls formed by standing up a metal plate 110 onto temporary dams 100, as illustrated in FIG. 3.

Note that temporary dams 100 and a metal plate 110 are disposed for the fill direction X, while temporary dams 100' and a metal plate 110' are disposed for the orthogonal direction Y.

Next, by disposing an internal partitioning temporary dams 200 in the fill direction X of the fill space Wn and standing up a partitioning metal plate 210 thereon, the fill space Wn forms a second space 2 where the internal partitioning temporary dams 200 are disposed, and the remaining first space 1.

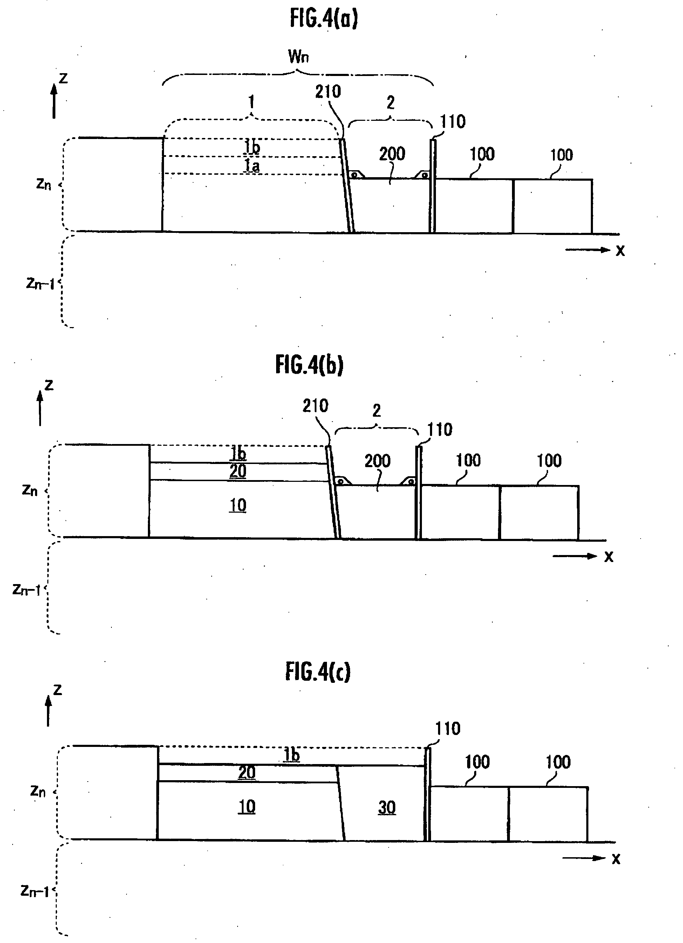

FIG. 4(A) illustrates how the fill space Wn is partitioned into the first space 1 and the second space 2 by the partitioning metal plate 210 in this way.

Note that the internal partitioning temporary dams 200 have a tapered face in which the face adjoining the partitioning metal plate 210 becomes narrower proceeding from top to bottom.

Next, before or after the preprocessing step in step 1, material such as a covering material consisting of a type-A banking material, a type-B banking material, and a cement mixture is prepared in advance (FIG. 2, step 5: material preparing step).

In such a material preparing step, a mixing apparatus (not illustrated) prepares the type-A banking material by mixing type-A inorganic waste, which does not contain incinerated ash with high concentrations of hazardous substances, with added cement and water, and also prepares the type-B banking material by mixing type-B inorganic waste, which does contain incinerated ash with high concentrations of hazardous substances, with added cement and water. Also, a cement mixture obtained by mixing cement with added substances such as sand and water (mortar, for example) is prepared as a covering material.

Note that the type-A inorganic waste is waste with a concentration of hazardous substances that is simply less than that of the type-B inorganic waste (irrespective of a reference value).

Next, a first compacted formation 10 is formed by pouring and compacting the type-B banking material into the first space 1 (FIG. 2, step 10: first step).

In such a first step, the first compacted formation 10 is formed by pouring type-B banking material, and then setting and compacting the poured type-B banking material, while leaving fixed upper spaces 1a and 1b at the top of the first space 1.

Next, a second compacted formation 20 is formed by pouring and compacting the type-A banking material into the upper space 1a over the first compacted formation 10 (FIG. 2, step 20: second step).

In such a second step, the second compacted formation 20 is formed by pouring type-A banking material into the upper space 1a over the first compacted formation 10 (leaving the upper space 1b), and then setting and compacting the poured type-A banking material.

Note that in the second step, it is preferable to not have the type-B banking material and the type-A banking material come into direct contact, by evenly spreading and setting fresh gravel over the first compacted formation 10 before pouring the type-A banking material. This also exhibits a shielding effect due to the gravel in the case where the type-B banking material contains radioactive substances.

FIG. 4(B) illustrates how the first compacted formation 10 and the second compacted formation 20 are formed in the first space 1 in this way.

Next, the partition between the first space 1 and the second space 2 is removed, and a third compacted formation 30 is formed by pouring and compacting type-A banking material into the second space 2 (FIG. 2, step 30: third step).

In such a third step, first the internal partitioning temporary dams 200 are hoisted and eliminated, and next the partitioning metal plate 210 is removed. At this point, since the internal partitioning temporary dams 200 have a tapered face in which the face adjoining the partitioning metal plate 210 becomes narrower proceeding from top to bottom, the high pressure applied to this face during the compaction of the first compacted formation 10 and the second compacted formation 20 acts to push the internal partitioning temporary dams 200 upwards. For this reason, the internal partitioning temporary dams 200 may be easily hoisted up and removed.

Subsequently, the third compacted formation 30 is formed by pouring type-A banking material, and then setting and compacting the poured type-A banking material, while leaving the fixed upper space 1b at the top of the second space 2. At this point, the type-A banking material is poured and set such that the surface of the third compacted formation 30 becomes continuous with the second compacted formation 20.

FIG. 4(C) illustrates how the third compacted formation 30 is formed in the second space 2 in this way.

Note that a structure in which a first compacted formation 10, a second compacted formation 20, and a third compacted formation 30 are integrated is equivalent to a compacted formation of the present invention.

Next, the top surface of the second compacted formation 20 and the third compacted formation 30 is shielded (FIG. 2, step 40: fourth step).

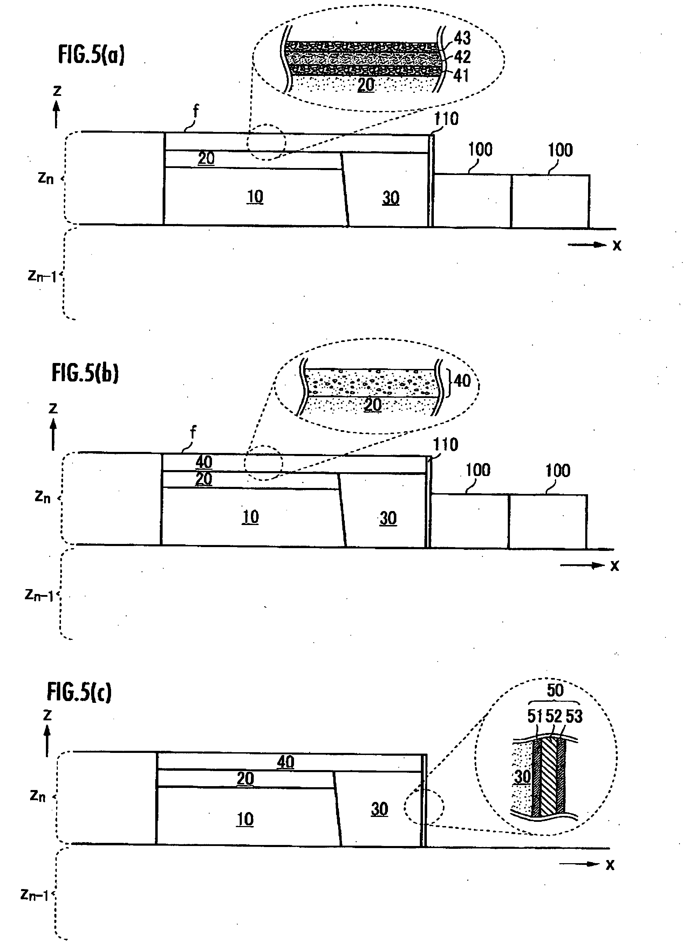

In such a fourth step, an upper primary shield layer 41 is formed by evenly spreading and compacting fresh gravel over the second compacted formation 20 and the third compacted formation 30 (in the upper space 1b), as illustrated by the partially enlarged view in FIG. 5(A). Subsequently, an upper capping layer 42 is formed by evenly spreading the covering material consisting of a cement mixture that was prepared in step 5 (mortar, for example), and then evenly spreading and compacting gravel onto the evenly spread covering material. Additionally, gravel is evenly spread over the upper capping layer 42.

Subsequently, the upper primary shield layer 41, the upper capping layer 42, and an upper secondary shield layer 43 are integrated by spreading a cover metal plate (not illustrated) so as to cover the entire top surface of the upper secondary shield layer 43, placing a weight (not illustrated) on the cover metal plate, and allowing a curing period to elapse. At this point, the surface f becomes continuous with the adjacent divisions. Then, after the curing period elapses, the cover metal plate and the weight are removed.

Then partially enlarged view in FIG. 5(B) illustrates the upper shield structure 40 obtained as a result.

By forming the upper shield structure 40 integrating the three layers of shields 41 to 43 on the top face of the compacted formations, contact between inorganic waste and rainwater is completely avoided at the top face of the compacted formations.

Next, a lateral face of the third compacted formation 30 that is exposed by removing a lateral wall in the fill direction X is shielded (FIG. 2, step 50: fifth step).

In such a fifth step, first the temporary dams 100 in the fill direction X are hoisted and eliminated, and next the metal plate 110 is removed.

At this point, the temporary dams 100' and the metal plate 110' in the Y direction orthogonal to the fill direction X are kept until starting to fill the next division (Xn, Yn+1). Thus, it is possible to prevent exposing lateral walls in the direction Y orthogonal to the fill direction X. Note that even though filling of the next division (Xn, Yn+1) may be started in a comparatively short period after finishing the filling of the current division (Xn, Yn), it is preferable to cover the division boundary portions given by the metal plate 110' with a vinyl sheet or the like as necessary until starting the next filling.

Subsequently, a lateral primary shield layer 51 is formed by applying a coating (a highly waterproof building exterior coating, such as an epoxy resin undercoating, for example) to the exposed lateral face of the third compacted formation 30. In addition, a lateral capping layer 52 is formed by applying a thick coating (a highly waterproof building exterior coating, such as a thick plastic emulsion finishing coat material, for example) to the lateral primary shield layer 51. Additionally, a lateral secondary shield layer 53 is formed by applying a coating (a highly waterproof building exterior coating, such as an epoxy resin finish coating, for example) to the lateral capping layer 52.

Note that in the case where depressions exist in the exposed lateral face of the third compacted formation 30, it is preferable to form the lateral primary shield layer 51, the lateral capping layer 52, and the lateral secondary shield layer 53 after first grouting the depressions with covering material in advance.

By forming a lateral shield structure 50 with the three layers of shields 51 to 53 on the lateral face of the compacted formations, contact between inorganic waste and rainwater is completely avoided at the lateral face of the compacted formations.

In this way, according to an inorganic waste solidification shield structure that forms an upper shield structure 40 and a lateral shield structure 50 at the top and lateral faces of a compacted formation, it is possible to shield the top and lateral faces of a compacted formation and avoid contact between inorganic waste and rainwater. It is possible to completely prevent the eluting in rainwater of inorganic waste contained in the compacted formation.

Test results actually conducted at a final disposal site will now be described.

First, in a permeation test of the upper shield structure 40 of a compacted formation formed in this way, although permeation of 0.04 liters due to surface water absorption at a permeation surface of diameter 200 mm was confirmed in the first 20 minutes from the start of the permeation test was confirmed, permeation was not confirmed from 20 minutes to 120 minutes, thus confirming that there was no permeation.

Also, a compacted formation test piece of similar configuration was created, and in an elution test of a test piece clad with the lateral shield structure 50, it was confirmed that the elution of cesium-134 and cesium-137 from inorganic waste containing a total of 64300 Bq/kg of cesium-134 and cesium-137 was not detected, being less than the detection threshold limit of 0.4 Bq/L.

Furthermore, at an actual final disposal site, it was confirmed that hazardous materials containing radioactive substances were likewise not detected in sampled retained water (raw water).

### Description of Reference Numerals

- 1:: First space
- 2:: Second space
- 10:: First compacted formation part (compacted formation)
- 20:: Second compacted formation part (compacted formation)
- 30:: Third compacted formation part (compacted formation)
- 40:: Upper shield structure
- 41:: Upper primary shield layer
- 42:: Upper capping layer
- 43:: Upper secondary shield layer
- 50:: Lateral shield structure
- 51:: Lateral primary shield layer
- 52:: Lateral capping layer
- 53:: Lateral secondary shield layer
- 100:: Temporary dam
- 110:: Metal plate
- 200:: Internal partitioning temporary dam
- 210:: Partitioning metal plate

## Claims

1. A method of manufacturing an inorganic waste solidification shield structure that shields a compacted formation obtained by filling in banking material containing inorganic waste at a final disposal site, **characterized by** comprising:
a preprocessing step that secures a first space (1) and a second space (2) by partitioning, in the horizontal direction, a space which is to be filled with the banking material and which is demarcated by walls at the final disposal site;
a first step that forms a first compacted formation (10) by pouring and compacting a type-B banking material containing a type-B inorganic waste with high concentrations of hazardous substances over the first space (1) partitioned by the preprocessing step;
a second step that forms a second compacted formation (20) by pouring and compacting a type-A banking material containing a type-A inorganic waste with low concentrations of hazardous substances over the first compacted formation (10) obtained by the first step;
wherein the low concentrations of hazardous substances of the type-A inorganic waste are less than the high concentrations of hazardous substances of the type-B inorganic waste;
a third step that forms a third compacted formation (30) by removing the partition between the first space (1) and the second space (2) after the second compacted formation (20) is formed by the second step, and pouring and compacting the type-A banking material into the second space (2);
a fourth step that forms an upper primary shield layer (41) by evenly spreading and compacting gravel over the second compacted formation (20) and the third compacted formation (30) obtained by the second step and the third step, forms an upper capping layer (42) by evenly spreading a covering material consisting of a cement mixture over the upper primary shield layer (41), and evenly spreading and compacting gravel onto the evenly spread covering material, forms an upper secondary shield layer (43) by evenly spreading gravel over the upper capping layer (42), and integrates the upper primary shield layer (41), the upper capping layer (42), and the upper secondary shield layer (43) by placing a weight on top of the upper secondary shield layer (43) and allowing a curing period to elapse; and
a fifth step that, after the upper primary shield layer (41), the upper capping layer (42), and the upper secondary shield layer (43) are integrated by the fourth step, forms a lateral primary shield layer (51) by applying a coating to a lateral face of the third compacted formation (30) that is exposed by removing the walls, forms a lateral capping layer (52) by applying a coating to the lateral primary shield layer (51), and forms a lateral secondary shield layer (53) by applying a coating to the lateral capping layer (52).

## Patentansprüche

1. Verfahren zur Herstellung einer Abschirmstruktur für die Verfestigung von anorganischem Abfall, die eine verdichtete Formation abschirmt, die durch Einfüllen von Auffüllmaterial, welches anorganischen Abfall aufweist, an einem Endlager erhalten wird, **dadurch gekennzeichnet, dass** es Folgendes umfasst:
einen Vorverarbeitungsschritt, der einen ersten Raum (1) und einen zweiten Raum (2) durch Aufteilung in der horizontalen Richtung sicherstellt, wobei ein Raum mit dem Auffüllmaterial gefüllt werden soll, der durch Wände an dem Endlager abgegrenzt ist;
einen ersten Schritt, der eine erste verdichtete Formation (10) durch Einfüllen und Verdichten eines Auffüllmaterials vom Typ B bildet, das einen anorganischen Abfall vom Typ B mit hohen Konzentrationen an Gefahrenstoffen enthält, über den ersten Raum (1), der durch den Vorverarbeitungsschritt abgeteilt ist;
einen zweiten Schritt, der eine zweite verdichtete Formation (20) durch Einfüllen und Verdichten eines Auffüllmaterials vom Typ A bildet, das einen anorganischen Abfall vom Typ A mit niedrigen Konzentrationen an Gefahrenstoffen enthält, über der ersten Formation (10), die durch den ersten Schritt erhalten wird;
wobei die niedrigen Konzentrationen an Gefahrenstoffen des anorganischen Abfalls vom Typ A geringer als die hohen Konzentrationen an Gefahrenstoffen des anorganischen Abfalls vom Typ B sind;
einen dritten Schritt, der eine dritte verdichtete Formation (30) durch Entfernen der Aufteilung zwischen dem ersten Raum (1) und dem zweite Raum (2), nach Bilden der zweiten verdichteten Formation (20) durch den zweiten Schritt, und Einfüllen und Verdichten des Auffüllmaterials vom Typ A in den zweiten Raum (2);
einen vierten Schritt, der eine obere primäre Abschirmschicht (41) durch gleichmäßiges Verteilen und Verdichten von Kies über der zweiten verdichteten Formation (20) und der dritten verdichteten Formation (30) bildet, die durch den zweiten Schritt und den dritten Schritt erhalten wurden, und bilden einer oberen Deckschicht (42) durch gleichmäßiges Verteilen eines Abdeckmaterials, das aus einer Zementmischung besteht, über der oberen primären Abschirmschicht (41), und durch gleichmäßiges Verteilen und Verdichten von Kies auf das gleichmäßig verteilte Abdeckmaterial zur Bildung einer oberen sekundären Abschirmschicht (43) durch gleichmäßiges Verteilen von Kies über der oberen Deckschicht (42), und Integrieren der oberen primären Abschirmschicht (41), der oberen Deckschicht (42) und der oberen sekundären Abschirmschicht (43) durch Anordnen eines Gewichts auf der oberen sekundären Abschirmschicht (43) und Verstreichenlassen eines Härtungszeitraums; und
einen fünften Schritt, der, nachdem die obere primäre Abschirmschicht (41), die obere Deckschicht (42) und die obere sekundäre Abschirmschicht (43) durch den vierten Schritt integriert sind, eine seitliche primäre Abschirmschicht (51) durch Aufbringen einer Beschichtung auf eine Seitenfläche der dritten verdichteten Formation (30) bildet, die durch Entfernen der Wände freiliegend ist, bilden einer seitlichen Deckschicht (52) durch Aufbringen einer Beschichtung auf die seitlichen primären Abschirmschicht (51) und bilden einer seitlichen sekundären Abschirmschicht (53) durch Aufbringen einer Beschichtung auf die seitliche Deckschicht (52).

## Revendications

1. Procédé d'obtention d'une structure formant bouclier de protection de déchets inorganiques solidifiés qui protège une formation compactée obtenue en chargeant un matériau de remblayage renfermant des déchets inorganiques dans un site de dépôt final,
**caractérisé en ce qu'**
il comporte les étapes suivantes :
une étape préalable qui protège un premier espace (1) et un second espace (2) en subdivisant, en direction horizontale, un espace devant être chargé par le matériau de remblayage et qui est délimité par des parois sur le site de dépôt final,
une première étape qui forme une première conformation compacte (10) en versant et compactant un matériau de remblayage de type B renfermant des déchets inorganiques de type B ayant une forte concentration en substances très dangereuses sur le premier espace (1) subdivisé lors de l'étape préalable,
une seconde étape qui forme une seconde conformation compactée (20) en versant et compactant un matériau de remblayage de type A renfermant des déchets inorganiques de type A ayant une faible concentration en substances très dangereuses sur la première conformation compactée (10) obtenue lors de la première étape,
les faibles concentrations de substances très dangereuses de déchets inorganiques de type A étant inférieures aux fortes concentrations de substances très dangereuses des déchets inorganiques de type B,
une troisième étape qui forme une troisième conformation compactée (30) en supprimant la subdivision entre le premier espace (1) et le second espace (2) après que la seconde conformation compactée (20) ait été formée par la seconde étape et en versant et en compactant le matériau de remblayage de type A dans le second espace (2),
une quatrième étape qui forme une couche formant bouclier de protection primaire supérieur (41) en répandant uniformément et en compactant du gravier sur la seconde conformation compactée (20) et la troisième conformation compactée (30) obtenues par la première étape et la troisième étape, forme une couche de recouvrement supérieure (42) en répandant uniformément un matériau de recouvrement constitué par un mélange de ciment sur la couche formant bouclier de protection primaire (41), et en répandant uniformément et en compactant du gravier sur le matériau de recouvrement répandu uniformément, forme une couche formant bouclier de protection secondaire supérieur (43) en répandant uniformément du gravier sur la couche de recouvrement supérieure (42) et intègre la couche formant bouclier de protection primaire supérieur (41), la couche de recouvrement supérieure (42) et la couche formant bouclier de protection secondaire supérieur (43) en positionnant un poids au-dessus de la couche formant bouclier de protection secondaire supérieur (43) et en permettant l'écoulement d'une période de réticulation, et
une cinquième étape qui, après que la couche formant bouclier de protection primaire supérieur (41), la couche de recouvrement supérieure (42) et la couche formant bouclier de protection secondaire supérieur (43) aient été intégrées par la quatrième étape forme une couche formant bouclier de protection primaire latéral (51) en appliquant un revêtement sur une face latérale de la troisième conformation compactée (30) qui est dégagée en enlevant les parois, forme une couche de recouvrement latérale (52) en appliquant un revêtement sur la couche formant bouclier de protection primaire latéral (51) et forme une couche formant bouclier de protection secondaire latérale (53) en appliquant un revêtement sur la couche de recouvrement latérale (52).
